Europäisches Patentamt

**European Patent Office**

Office européen des brevets

(19)

(11) Numéro de publication : **0 107 553**
**B1**

(12)

# FASCICULE DE BREVET EUROPÉEN

(45) Date de publication du fascicule du brevet :
11.02.87

(51) Int. Cl.⁴ : **G 06 K   7/08**

(21) Numéro de dépôt : **83401943.2**

(22) Date de dépôt : **04.10.83**

(54) **Dispositif de traitement automatique des informations d'une carte, notamment d'une carte magnétique et/ou électronique.**

(30) Priorité : **15.10.82 FR 8217295**

(43) Date de publication de la demande :
**02.05.84 Bulletin 84/18**

(45) Mention de la délivrance du brevet :
**11.02.87 Bulletin 87/07**

(84) Etats contractants désignés :
**DE**

(56) Documents cités :
**FR-A- 2 356 206**
**US-A- 3 555 246**
**US-A- 4 151 564**

(73) Titulaire : **COMPAGNIE EUROPEENNE DE COMPO-
SANTS ELECTRONIQUES LCC**
**50, rue Jean -Pierre Timbaud B.P. 301**
**F-92402 Courbevoie (FR)**

(72) Inventeur : **Chabrolle, Jacques**
**THOMSON-CSF SCPI 173, bld Haussmann**
**F-75379 Paris Cedex 08 (FR)**

(74) Mandataire : **Ruellan-Lemonnier, Brigitte et al**
**THOMSON-CSF SCPI 19, avenue de Messine**
**F-75008 Paris (FR)**

## Description

La présente invention est relative à un dispositif de traitement automatique d'informations à la lecture et/ou à l'écriture sur une carte notamment une carte magnétique, par exemple du type carte de crédit, et/ou une carte électronique.

Dans les premiers équipements connus, la carte est introduite par l'utilisateur dans une fente puis est véhiculée par le dispositif lors des opérations de traitement. Ces systèmes sont relativement compliqués à réaliser et par conséquent onéreux. On a alors pensé à utiliser des dispositifs plus simples où la carte est maintenue en position immobile pendant son traitement et dans lequel un dispositif de verrouillage bloque la carte en position fixe enlevant à l'utilisateur toute possibilité de retirer celle-ci de la fente dans laquelle elle a été introduite pendant toute la période de transaction. Les opérations d'enregistrement et/ou de lecture sont alors réalisées par déplacement des têtes magnétiques correspondantes. Le dispositif de verrouillage de la carte est absolument nécessaire pour éviter toute utilisation frauduleuse de celle-ci.

Un dispositif de traitement automatique de ce type est notamment connu par le brevet US-A-4 151 564. Dans ce dispositif, l'introduction de la carte dans une fente de réception entraîne, grâce à un mécanisme assez compliqué, le déclenchement d'un dispositif de verrouillage qui permet le blocage de la carte en position.

L'objet de la présente invention est la réalisation d'un dispositif de traitement automatique des informations d'une carte magnétique dans lequel la carte est maintenue en position immobile pendant son traitement et possédant un dispositif de verrouillage simple et efficace.

L'invention a donc pour objet un dispositif automatique de traitement d'une carte portant des informations, comportant :

— un boîtier comprenant un logement pour recevoir une dite carte ;

— un chariot mobile par rapport au boîtier et portant au moins une tête destinée audit traitement ;

— un dispositif pour entraîner le chariot mobile ;

— un dispositif de commande automatique du déplacement du chariot mobile et de traitement de la carte ;

— un dispositif de verrouillage commandé par le déplacement du chariot mobile pour bloquer la carte dans le logement pendant le traitement, caractérisé en ce que la commande du dispositif de verrouillage est assurée par un galet porté par le chariot mobile et venant en contact avec une came constituée par un volet à profil incurvé mobile en rotation autour d'un axe fixe par rapport au boîtier.

Selon une variante, le dispositif pour entraîner le chariot mobile comporte un moteur porté par le chariot mobile et une poulie en liaison mécanique avec le boîtier. La poulie peut être associée à un câble tendu porté par le boîtier et qui fait au moins un tour autour de la poulie, la rotation de la poulie entraînant alors le déplacement du chariot mobile le long du câble. Le câble peut être maintenu tendu par l'intermédiaire d'un ressort afin d'assurer une tension constante tout en constituant un amortissement lors des démarrages et des arrêts du moteur. A cet effet, il est avantageux que la poulie soit pourvue d'une gorge hélicoïdale.

Le chariot mobile peut porter au moins un guide à billes guidé par un axe cylindrique solidaire du boîtier, et une roulette guidée par une rainure parallèle à l'axe cylindrique, ménagés dans le boîtier.

Le dispositif de verrouillage peut comporter au moins un ergot de blocage de carte.

Selon un mode de réalisation particulièrement avantageux, le dispositif de verrouillage est actionné par le volet par l'intermédiaire d'un deuxième ressort de raideur plus élevée qu'un premier ressort de rappel de l'ergot. Ceci permet de réaliser un blocage par élasticité tout en maintenant la fonction de rappel de l'ergot. Le deuxième ressort peut être constitué par un ressort à lame en forme de V, dont la partie centrale est prise autour d'un téton fixe par rapport au boîtier, les deux branches du V portant respectivement sur le volet et sur l'ergot. Le dispositif de verrouillage peut être constitué par une pièce en forme de L mobile, au niveau d'une première branche, autour d'un deuxième axe fixe par rapport au boîtier, et présenter une deuxième branche pénétrant transversalement dans le logement.

Le chariot mobile peut porter une tête de lecture de piste horloge en contact avec une piste horloge solidaire du boîtier.

Le dispositif de commande automatique peut être actionné par un détecteur de présence d'une carte, de manière à assurer un cycle de traitement.

L'invention sera mieux comprise à la lecture de la description qui va suivre donnée à titre d'exemple non limitatif, en se reportant aux dessins ci-annexés où :

la figure 1 représente en perspective cavalière avec arrachement partielle un schéma d'un dispositif selon l'invention ;

la figure 2 représente un dispositif selon l'invention en coupe transversale ;

la figure 3 représente un diaghramme du fonctionnement automatique du dispositif selon l'invention ;

la figure 4 représente une variante de dispositif de verrouillage de la carte.

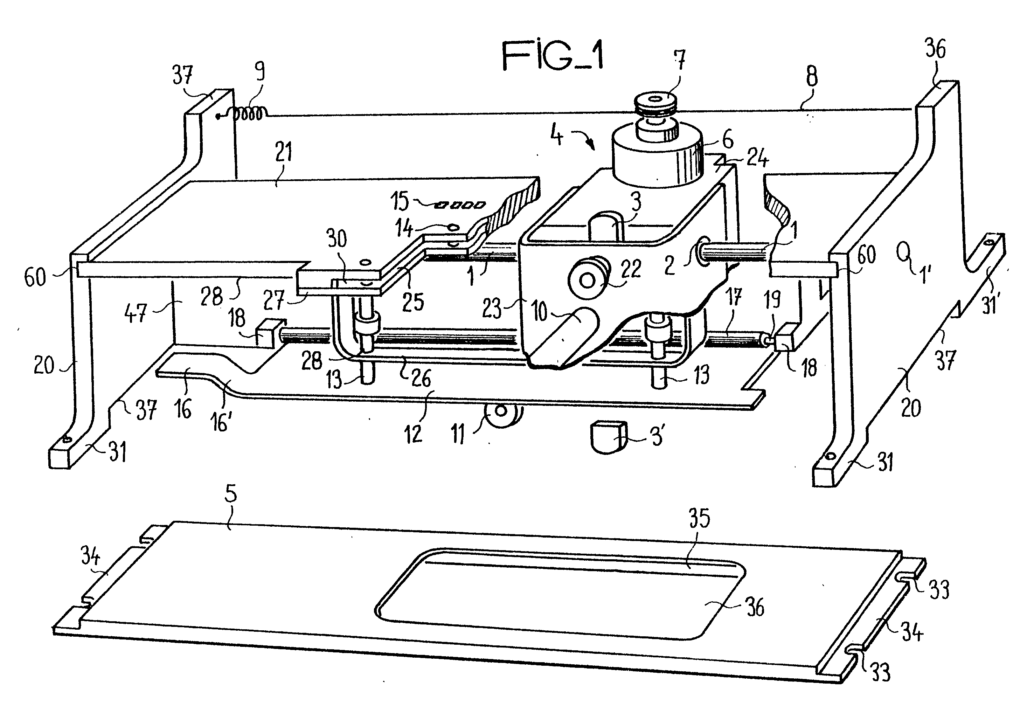

Selon la figure 1, le dispositif comporte un boîtier 15 constitué par deux parois latérales 20 comportant à sa partie inférieure des décrochements 37 présentant des taraudages non représentés et destinés à permettre la fixation d'une plaque inférieure 5 pourvue à chacune de ses extrémités longitudinales de pattes 34 dans lesquelles sont ménagées des encoches 33 destinées à recevoir des vis de fixation. Chacune des parois latérales 20 est pourvue à sa partie supérieure d'une rainure 60. Ces rainures 60 reçoivent une plaque constituant une platine 21. La longueur des rainures 60 est approximativement égale à la largeur de la platine 21. La platine 21 est maintenue en butée dans les rainures 60 par tous moyens apppropriés. Par exemple, la platine 21 et les rainures 60 peuvent être dimensionnées de manière telle que la plaque 21 rentre à force dans les rainures 60.

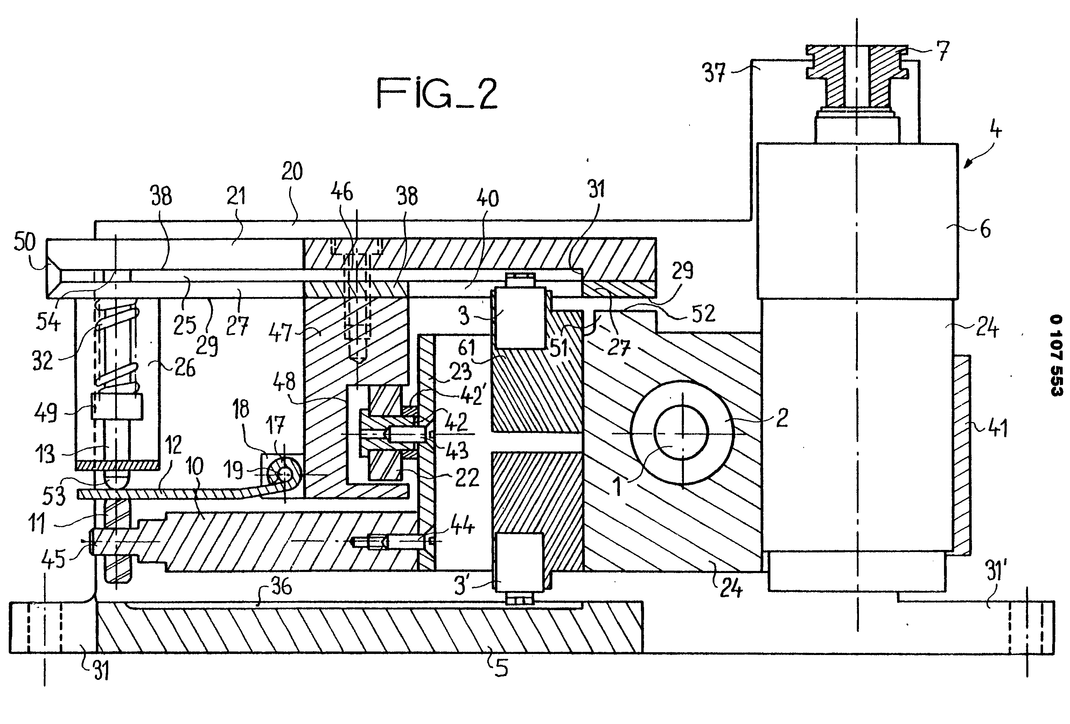

Un chariot mobile désigné par le repère général 4 est susceptible de se déplacer sur un axe porteur 1 fixé à chacune de ses extrémités sur les parois latérales 20. Ce déplacement s'opère par l'intermédiaire de guides à billes 2 portés par le chariot mobile 4. Le maintien en position horizontale du chariot mobile 4 est assuré lors de son déplacement par une roulette 22 tournant dans un roulement solidaire du chariot 4. La roulette 22 se déplace dans une gorge parallélépipédique dont l'axe est parallèle à l'axe 1. Cette gorge est représentée à la figure 2 sur le repère 48. Un moteur 6 est porté par un support 24 du chariot mobile et entraîne une poulie 7. Un fil 8, tendu entre les extrémités supérieures 36 et 37 des bords latéraux 20 fait au moins un tour autour de la poulie 7. A cet effet, la poulie 7 présente avantageusement une gorge hélicoïdale. La tension du fil 8 est assurée par un ressort hélicoïdal 9. Dans ces conditions, l'actionnement du moteur 6 entraîne le déplacement longitudinal du chariot mobile le long de l'axe 1, entre les parois latérales 20.

Un étrier 23, fixé sur le support 24 et traversé par l'axe 1 au niveau de deux guides à billes 2, porte le roulement correspondant à la roulette 22 et un manchon 10. A l'intérieur de cet étrier 23, les têtes magnétiques 3 et 3' destinées l'une à la lecture de la carte et l'autre à la lecture d'une piste horloge 35 disposée dans un embrêvement 36 de la plaque inférieure 5 sont montées sur le bloc 24. On remarquera que la piste horloge 35 n'a lieu d'exister que lorsque la carte doit être encodée ou réencodée (voir la demande de brevet français 25 01 401 par la Demanderesse). D'autre part, d'autres dispositifs connus de codage du déplacement du chariot mobile 4 peuvent être utilisés.

Un volet 12 articulé autour d'un axe 19 parallèle à l'axe 1 et porté par des prolongements 18 d'une pièce 47 formant support et solidaire du boîtier, présente un bord 17 roulé autour dudit axe 19. Le côté opposé au bord roulé 17 se prolonge à une extrémité par un profil incurvé 16' lui-même prolongé par un plat 16. Des ergots de blocage 13 coulissant librement dans un étrier 26 porté par la face inférieure 28 de la platine 21 sont en contact mécanique avec le volet 12. Lorsque le chariot mobile 4 est en position de repos, c'est-à-dire en butée du côté gauche sur le dessin, une roulette 11 portée par le manchon 10 est en contact avec le plat 16 du volet 12. Le volet 12 est en effet maintenu en contact avec la roulette 11 sous l'action de son poids propre qui peut à lui seul suffire et de la force de rappel du ressort 32. Dans ces conditions, les ergots 13 sont en position basse. Lors de l'opération de traitement telle qu'une transaction, une carte est introduite dans une fente 25 ménagée à la partie inférieure de la platine 21 jusqu'à venir en butée en 31 (figure 2). Cette fente est constituée par un embrêvement 30 de la platine 21 et par une plaque 27 fixée à la face inférieure 28 de la platine 21 et recouvrant l'embrêvement 30. La présence de la carte magnétique est détectée par un dispositif 14 disposé dans la fente 25, lequel commande automatiquement le cycle de traitement. A ce moment, le chariot mobile est actionné et se déplace longitudinalement le long de l'axe 1 (vers la droite sur la figure 1). La roulette 11 vient successivement au contact avec le profil incurvé 16 puis avec la partie inférieure du volet 12, ce qui a pour effet de déplacer les ergots 13 vers le haut. L'extrémité supérieure des ergots 13 traverse alors des alésages ménagés dans la plaque 27 et dans la platine 21, et vient bloquer la carte en position pendant toute la durée du traitement de lecture et/ou d'écriture. Un tel traitement peut d'ailleurs mettre en œuvre plusieurs mouvements de va-et-vient de la carte pendant la transaction. Ledit dispositif est dimensionné de manière telle que le blocage de la carte est effectif sur toute la plage de traitement de celle-ci par la tête 3.

Sur la figure 2, on voit le support 24 sur lequel sont fixés, outre l'étrier 23, d'une part deux blocs porte-tête 61 portant respectivement les têtes 3 et 3', et d'autre part un étrier 41 sur lequel est fixé le moteur 6. Le bloc 24 porte en outre à sa partie supérieure un bossage 51 portant une tête de détection 52. La tête de détection 52, associée à des marques correspondantes portées par la partie inférieure 29 de la plaque 27, permet de détecter les positions en fin de course du chariot mobile 4. Le roulement 42 de la roulette 22 est fixé à l'étrier 23 par une vis 43, son positionnement étant déterminé par une entretoise 42'. La rainure 48 parallèle à l'axe 1 est ménagée dans le support 47 fixé par des vis 46 à la partie inférieure de la platine 21. La plaque inférieure 27 présente une ouverture 40 bordée par un cache 38 permettant à la tête 3 de lire la ou les pistes de la carte disposée dans la rainure 25 tout en empêchant l'utilisateur d'avoir accès à la tête 3. Les pivots 13 sont pourvus d'une partie inférieure arrondie 53 qui porte sur le volet 12 et d'une partie centrale élargie 49 servant de butée à un ressort 32 qui est comprimé entre la partie centrale 49 et la portion inférieure 29 de la plaque 27. L'extrémité supérieure 54 du pivot 13 est plane. Le ressort 32 permet d'assurer un rappel du pivot 13 ainsi que du volet 12 lorsque la roulette 11 est en contact avec le plat 16.

On va maintenant décrire un exemple de procédure d'assemblage du dispositif précédemment décrit.

Sur une des parois latérales 20 (celle de gauche par exemple), on monte l'axe porteur 1.

Le chariot mobile est alors assemblé dans l'ordre suivant :

On met en place le ou les guides à billes 2 sur le support 24 et on monte les blocs porte-têtes 61 équipés de leurs têtes 3 et 3'. Après cette opération, on fixe la roulette 22 sur l'étrier 23, ainsi que le manchon 10 (équipé de la roulette 11) par la vis 44.

Après quoi, il est possible de procéder au montage du moteur 6 équipé de sa poulie 7 à l'aide de l'étrier 41.

On met ensuite en place le bossage 51 avec son système de détection 52, et on fixe l'étrier 23 sur le support 24.

Le chariot mobile est alors engagé sur l'axe porteur 1.

De la même manière, il est procédé à l'assemblage de la plaque 27 sur la platine 21, ainsi que du support 47 (à l'aide des vis 46) sur lequel a été préalablement monté le volet 12, après quoi, on procède à la fixation des étriers 26 (sur la platine 21) équipés des ergots 13 sur lesquels sont montés les ressorts 32.

La platine ainsi équipée est alors engagée dans la rainure 60 de la paroi latérale (gauche) en assurant l'engagement du galet 22 dans la rainure de guidage 48 et le bon positionnement du galet 11 sur le volet 12. L'engagement du galet 22 dans la rainure 48 a lieu lorsque la tête 3 est à l'aplomb de l'ouverture 40.

Il est alors possible de mettre en place la seconde paroi latérale 20 (droite par exemple) sur laquelle est immobilisée l'autre extrémité de l'axe porteur 1, ainsi que la platine 21.

Enfin, la plaque inférieure 5, équipée de la carte horloge est fixée à l'aide des pattes 34 sur les parois latérales 20.

Le fil 8 est alors immobilisé aux points 36 et 37 après avoir fait au moins un tour sur la poulie moteur 7.

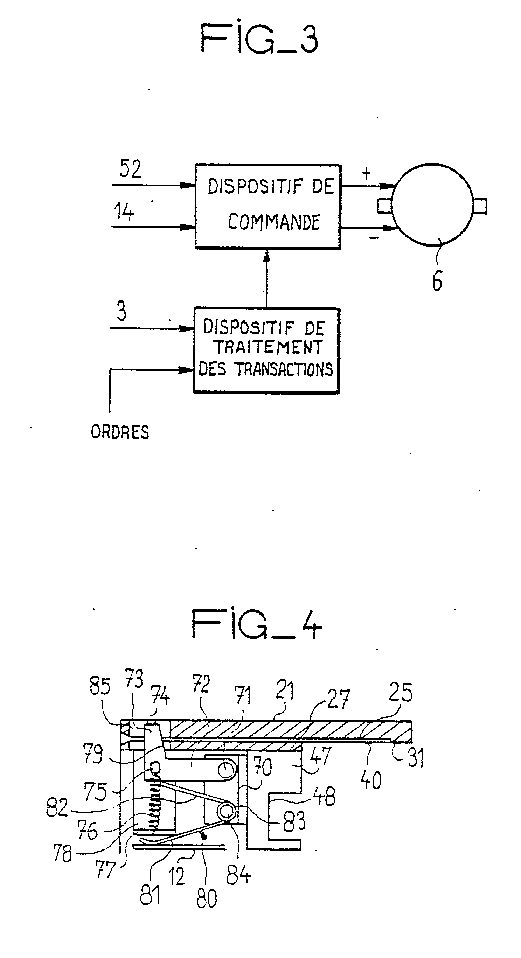

Selon la figure 3, un dispositif de commande du moteur 6 reçoit des signaux du détecteur de présence 14, et du détecteur de fin de course 52, ainsi que des signaux de commande d'un dispositif de traitement des transactions. Ce dernier reçoit des ordres pour l'exécution de la transaction, par exemple des instructions données sur un clavier par le titulaire de la carte, ainsi que les signaux lus par la tête 3. Le dispositif de commande envoie alors en direction du moteur 6 des signaux de commande correspondant à la rotation du moteur dans l'un ou l'autre sens (plus ou moins). Plus spécifiquement, lors de l'introduction d'une carte 14 dans la fente 25, le signal du détecteur de présence 14 provoque la mise en route du moteur 6 par le dispositif de commande. Le chariot mobile 4 est entraîné longitudinalement le long de l'axe 1, vers la carte, par exemple en vue d'une lecture de celle-ci pour son identification. Le dispositif de traitement des transactions va alors envoyer des signaux de commande au dispositif de commande sous l'action d'une part des signaux lus par la tête 3 et des ordres donnés pour la transaction, par exemple à l'aide d'un clavier de dialogue. A la fin de la transaction, le dernier ordre sera un ordre de retour du chariot 4 en position de repos. Un signal produit par le détecteur de fin de course 52 représentera alors un signal d'arrêt pour le moteur en position de repos.

La figure 4 représente une variante du dispositif de blocage de la carte dans la rainure 25. Un support 70 porte deux axes respectivement 71 et 84. Autour de l'axe 71, une pièce en forme de L 72 est montée librement en rotation. La petite branche 73 du L comporte un bord 79 s'étendant depuis son extrémité 74 vers la grande branche du L et pouvant se prolonger jusqu'à celle-ci. Un ressort hélicoïdal 76 est accroché d'une part à un axe 75 de la pièce en forme de L 72 et d'autre part à un rebord 77 d'une butée de ressort 78 fixée à la partie inférieure de la platine 21. Le ressort 76 sert de ressort de rappel à la pièce 72.

Un ressort plat 80 en forme de V est fixé par une boucle centrale 83 à l'axe 84 du support 70. Cet axe 84 est situé en-dessous de l'axe 71. La branche inférieure 81 du ressort 80 porte sur le volet 12 et la branche supérieure 82 porte sur la partie inférieure de la pièce 72. Le ressort 80 a une raideur supérieure à celle du ressort 76.

Le fonctionnement est alors le suivant. Lorsque le chariot mobile est en position de repos, le volet 12 est en position basse sous l'action de son poids propre, qui peut à lui seul suffire et de la force de rappel du ressort 76 et la pièce 72 n'est pratiquement plus soumise à l'action du ressort 80. Elle est donc rappelée en position basse par le ressort 76, ce qui dégage l'extrémité 74 de la pièce 72 de la fente 25 et permet à l'utilisateur d'introduire ou de retirer sa carte. Au cours de la transaction, comme représenté à la figure 4, le volet 12 est en position haute. Le ressort 80 dont la raideur est plus grande que celle du ressort 76 entraîne la pièce 72 vers le haut de manière à assurer le blocage de la carte. L'extrémité 74 de la pièce 72 se trouve au niveau d'un logement 85 de la platine 21. La carte introduite dans la fente 25 est poussée en butée en 31 par le bord 79 en forme de rampe de la petite branche 73 du L de la pièce 72. Etant donné que la pièce 72 est poussée vers le haut par le ressort 80, il en résulte que le plaquage de la carte en butée en 31 est assuré par une force élastique d'intensité déterminée. D'autre part, le bord 79 du petit côté 73 de la pièce 72 est susceptible d'absorber des variations de largeur de la carte tout en assurant sa mise en butée sous l'action d'une force élastique. Un effet de rampe peut être obtenu en profilant le bord 79 de la petite branche 73 du L en contact avec la carte de telle sorte qu'il ne soit pas perpendiculaire à la carte lors du verrouillage de celle-ci en butée.

L'invention ne se limite pas aux exemples de réalisation décrits. Ainsi, le fait que la carte est maintenue fixe pendant la transaction peut être mis à profit pour rendre le dispositif utilisable avec les cartes électroniques. A cet effet, un connecteur approprié peut être disposé au niveau de la fente 25 de telle sorte que la carte électronique s'y enfiche lorsque cette dernière est mise en place en vue de la lecture de sa piste magnétique.

## Revendications

1. Dispositif automatique de traitement d'une carte portant des informations, comportant :
— un boîtier (15) comprenant un logement (25) pour recevoir une dite carte ;
— un chariot (4) mobile par rapport au boîtier et portant au moins une tête (3) destinée audit traitement ;
— un dispositif (6, 7) pour entraîner le chariot mobile ;
— un dispositif de commande automatique du déplacement du chariot mobile et de traitement de la carte ;
— un dispositif de verrouillage (12, 13, 72) commandé par le déplacement du chariot mobile pour bloquer la carte dans le logement (25) pendant le traitement,
caractérisé en ce que la commande du dispositif de verrouillage est assurée par un galet (11) porté par le chariot mobile (4) et venant en contact avec une came constituée par un volet (12) à profil incurvé (16, 16') mobile en rotation autour d'un axe (19) fixe par rapport au boîtier.

2. Dispositif selon la revendication 1, caractérisé en ce que le dispositif de verrouillage comporte au moins un ergot (13).

3. Dispositif selon l'une des revendications 1 ou 2, caractérisé en ce que le dispositif de verrouillage de la carte est rappelé par au moins un premier ressort.

4. Dispositif selon la revendication 3, caractérisé en ce que le dispositif de verrouillage est actionné par le volet (12) par l'intermédiaire d'un deuxième ressort (80) de raideur plus élevée que le premier.

5. Dispositif selon la revendication 4, caractérisé en ce que le deuxième ressort (80) est un ressort à lame en forme de V dont la partie centrale (83) est prise autour d'un téton (84) fixe par rapport au boîtier, et les deux branches (81, 82) du V portant respectivement sur le volet (12) et sur le dispositif de blocage (72).

6. Dispositif selon l'une des revendications 4 ou 5, caractérisé en ce que le dispositif de verrouillage est constitué par une pièce (72) en forme de L mobile au niveau d'une première branche autour d'un deuxième axe (71) fixe par rapport au boîtier (15) et comportant une deuxième branche (73) pénétrant transversalement dans le logement (25) de la carte.

7. Dispositif selon l'une quelconque des revendications 1 à 6, caractérisé en ce que le dispositif pour entraîner le chariot mobile (4) comporte un moteur (6) porté par le chariot mobile (4) et entraînant une poulie (7) en liaison mécanique avec le boîtier.

8. Dispositif selon la revendication 7, caractérisé en ce que la poulie (7) est associée à un câble (8) tendu porté par le boîtier et que fait au moins un tour autour de la poulie (7) de telle sorte que la rotation de la poulie (7) entraîne le déplacement du chariot mobile (4) le long du câble (8).

9. Dispositif selon la revendication 8, caractérisé en ce que le câble (8) est tendu par un ressort (9).

10. Dispositif selon l'une des revendications 7 ou 8, caractérisé en ce que la poulie (7) a une gorge hélicoïdale.

11. Dispositif selon l'une des revendications 1 à 10, caractérisé en ce que le chariot mobile (4) porte au moins un guide à billes (2) guidé par un axe porteur (1) solidaire du boîtier, et une roulette (22) guidée par une rainure (48) parallèle à l'axe cylindrique, ménagée et fixe par rapport au boîtier.

12. Dispositif selon l'une des revendications précédentes, caractérisé en ce que le chariot mobile (4) porte une tête de lecture (3') d'une piste horloge, en contact avec une piste horloge (35) solidaire du boîtier.

13. Dispositif selon l'une des revendications précédentes, caractérisé en ce que le dispositif de commande automatique est actionné par un détecteur (14) de présence d'une carte, de manière à assurer un cycle de traitement.

## Claims

1. A device for automatically processing a data bearing card, comprising :
— a casing (15) including an accomodation (25) for receiving such a card ;
— a carriage (4) movable with respect to the casing and bearing at least one head (3) intended to perform said processing ;
— a device (6, 7) for displacing said movable carriage ;
— a device for automatically controlling the displacement of the movable carriage and of the processing of the card ;
— a locking device (12, 13, 72) controlled by the movement of the movable carriage, in order to lock the card in its accomodation (25) during the processing phase,
characterized in that the control of the locking device is ensured by a roller (11) mounted on the movable carriage (4) and engaged with a cam constituted by a shutter (12) which presents a curved profile (16, 16') and which is rotatably mounted on an axis (19) stationary with respect to the casing.

2. A device according to claim 1, characterized in that the locking device comprises at least one pin (13).

3. A device according to one of claims 1 or 2, characterized in that the card locking device is reset by at least one spring.

4. A device according to claim 3, characterized in that the locking device is activated by the shutter (12) *via* a second spring (80) of a higher rigidity than the first one.

5. A device according to claim 4, characterized in that the second spring (80) is a V-shaped blade spring, the central portion (83) of which is em-prisoned around a pin (84) which is stationary with respect to the casing, whereas the two branches (81, 82) of the blade are applied against the shutter (12) and a locking device (72) respectively.

6. A device according to one of claims 4 or 5, characterized in that the locking device is constituted by a L-shaped element (72) which is movable at the level of a first branch around a second axis (71) stationary with respect to the casing (15), whereas its second branch (73) projects transversally into the accomodation (25) of the card.

7. A device according to any one of claims 1 to 6, characterized in that the device for displacing the movable carriage (4) comprises a motor (6) mounted on the movable carriage (4) and driving a roller (7) which is mechanically linked to the casing.

8. A device according to claim 7, characterized in that the roller (7) is associated to a tightened cable (8) which is supported by the casing and which is wound at least once around the roller (7) in such a way that the rotation of the roller (7) causes the displacement of the movable carriage (4) along the cable (8).

9. A device according to claim 8, characterized in that the cable (8) is tightened by a spring (9).

10. A device according to one of claims 7 or 8, characterized in that the roller (7) is provided with a spiral groove.

11. A device according to one of claims 1 to 10, characterized in that the movable carriage (4) bears at least one roller guide (2) guided by a support axis (1) stationary with respect to the casing, and a roller (22) guided by a groove (48) which is disposed parallelly to the support axis and which is stationary with respect to the casing.

12. A device according to one of the preceding claims, characterized in that the movable carriage (4) supports a clock track reading head (3') which is in contact with a clock track (35) on the casing.

13. A device according to one of the preceding claims, characterized in that the automatic control device is activated by a detector (14) for detecting the presence of a card in such a way that a processing cycle is ensured.

**Patentansprüche**

1. Vorrichtung zur automatischen Bearbeitung einer informationstragenden Karte, mit :
— einem Gehäuse (15), das einen Platz (25) zur Aufnahme einer solchen Karte besitzt ;
— einem bezüglich des Gehäuses beweglichen Wagen (4), der mindestens einen Kopf (3) für diese Bearbeitung trägt ;
— eine Vorschubvorrichtung (6, 7) für den beweglichen Wagen ;
— eine automatische Steuervorrichtung für die Verschiebung des beweglichen Wagens und die Bearbeitung der Karte ;
— eine Blockiervorrichtung (12, 13, 72), die von der Verschiebung des beweglichen Wagens gesteuert wird, um die Karte an ihrem Platz (25) während der Verarbeitung zu blockieren, dadurch gekennzeichnet, daß die Steuerung der Blockiervorrichtung durch ein Rädchen (11) bewirkt wird, das vom beweglichen Wagen (4) getragen wird und mit einer Nocke in Berührung kommt, die von einer Klappe (12) mit gekrümmtem Profil (16, 16') gebildet wird, wobei diese Klappe um eine bezüglich des Gehäuses feste Achse (19) drehbar ist.

2. Vorrichtung nach Anspruch 1, dadurch gekennzeichnet, daß die Blockiervorrichtung mindestens einen Zapfen (13) aufweist.

3. Vorrichtung nach einem der Ansprüche 1 oder 2, dadurch gekennzeichnet, daß die Blockiervorrichtung der Karte von mindestens einer Feder zurückgesetzt wird.

4. Vorrichtung nach Anspruch 3, dadurch gekennzeichnet, daß die Blockiervorrichtung von der Klappe (12) über eine zweite Feder (80) größerer Steifigkeit als die erste Feder betätigt wird.

5. Vorrichtung nach Anspruch 4, dadurch gekennzeichnet, daß die zweite Feder (80) eine V-förmige Blattfeder ist, deren mittlerer Bereich (83) einen am Gehäuse befestigten Vorsprung (84) umschließt, während die beiden Zweige (81, 82) der V-förmigen Feder an der Klappe (12) bzw. der Blockiervorrichtung (72) anliegen.

6. Vorrichtung nach einem der Ansprüche 4 oder 5, dadurch gekennzeichnet, daß die Blockiervorrichtung von einem L-förmigen Bauteil (72) gebildet wird, das in Höhe eines ersten Zweigs um eine zweite bezüglich des Gehäuses (15) feste Achse (71) beweglich ist und einen zweiten Zweig (53) aufweist, der transversal in den Platz (25) für die Karte eindringt.

7. Vorrichtung nach einem beliebigen der Ansprüche 1 bis 6, dadurch gekennzeichnet, daß die Vorrichtung zum Antrieb des beweglichen Wagens (4) einen Motor (6) enthält, der auf dem beweglichen Wagen (4) sitzt und eine Rolle (7) antreibt, die mechanisch mit dem Gehäuse verbunden ist.

8. Vorrichtung nach Anspruch 7, dadurch gekennzeichnet, daß die Rolle (7) einem gespannten Kabel zugeordnet ist, das vom Gehäuse getragen wird, und mindestens einmal um die Rolle (7) herumgelegt ist, so daß die Drehung der Rolle (7) die Verschiebung des beweglichen Wagens (4) entlang des Kabels (8) bewirkt.

9. Vorrichtung nach Anspruch 8, dadurch gekennzeichnet, daß das Kabel (8) von einer Feder (9) gespannt wird.

10. Vorrichtung nach einem der Ansprüche 7 oder 8, dadurch gekennzeichnet, daß die Rolle (7) eine schraubenförmige Kehle besitzt.

11. Vorrichtung nach einem der Ansprüche 1 bis 10, dadurch gekennzeichnet, daß der bewegliche Wagen (4) mindestens eine Kugelführung (2), die von einer am Gehäuse befestigten Trageachse (1) geführt wird, sowie eine kleine Rolle (22) trägt, die von einer parallel zur Tragachse verlaufenden und bezüglich des Gehäuses festen Rinne (48) geführt wird.

12. Vorrichtung nach einem der vorhergehenden Ansprüche, dadurch gekennzeichnet, daß der bewegliche Wagen (4) einen Lesekopf (3') für eine Taktspur trägt, der mit einer am Gehäuse angebrachten Taktspur (35) in Berührung steht.

13. Vorrichtung nach einem der vorhergehenden Ansprüche, dadurch gekennzeichnet, daß die Vorrichtung zur automatischen Steuerung von einem Detektor (14) für die Anwesenheit einer Karte betätigt wird, um einen Bearbeitungszyklus sicherzustellen.

# FIG_1

0 107 553

FiG_2

## FIG_3

## FIG_4